# EUROPEAN PATENT APPLICATION

(11) **EP 0 971 166 A2**
(43) Date of publication of application: **12.01.2000**
(21) Application number: 99112939.6
(22) Date of filing: 05.07.1999
(51) Int. Cl.: F21V 5/04, F21S 8/10

(54) **Motor-vehicle light having segmented fresnel lenses**

(30) Priority: 06.07.1998 IT TO980590
(71) Applicant: Automotive Lighting Italia Spa, 10078 Venaria Reale (Torino) (IT)
(72) Inventor: Perlo, Piero, 12048 Sommariva Bosco(Cuneo) (IT); Negri, Alessandro, 10123 Torino (IT); Repetto, Piermario, 10145 Torino (IT); Bigliati, Claudia, 13039 Trino (Vercelli) (IT)
(74) Representative: Notaro, Giancarlo

(57) **Abstract**

A motor-vehicle light comprises a light source (3), a reflector and an optical element (6) having a distribution of Fresnel lens segments (7), each of which is shaped so as to direct the light solid angle collected thereby along a predetermined direction.

## Description

The present invention relates to motor-vehicle lights, of the type comprising a light source and a Fresnel optical element located in front of the light source.

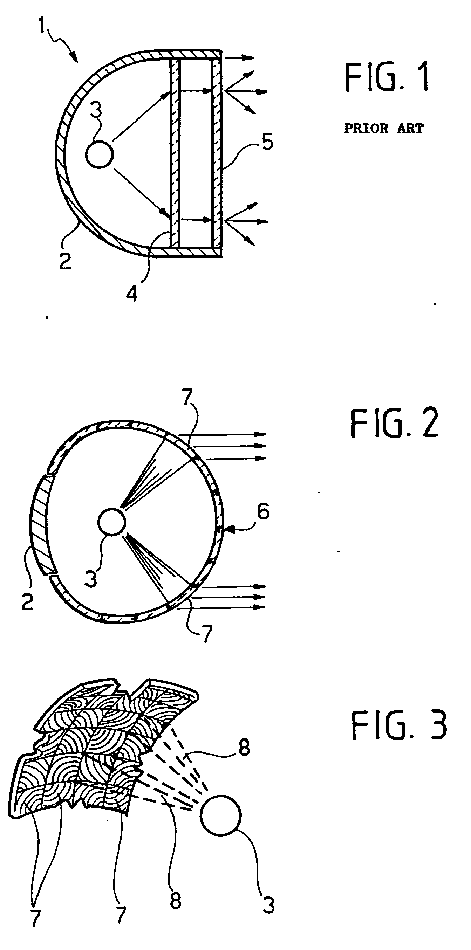

Figure 1 of the annexed drawings shows a typical light according to the prior art. The light, generally designated by reference numeral 1, has a body defining a reflector 2 to which a light source 3 is associated, such as an incandescence lamp 3. In front of lamp 3 a Fresnel lens 4 is located which directs the rays received directly from source 3 and indirectly through reflector 2 into a beam having predetermined characteristics. In front of the Fresnel lens 4 there is located a transparent element 5 having a distribution of diffusing lenses, adapted to diffuse the received light beam along predetermined directions.

The object of the present invention is that of providing a light which has a greater efficiency with respect to the lights according to the prior art, while having a relatively simple and inexpensive structure and which also provides novel aesthetical features.

In view of achieving this object, the light according to the invention is characterized in that it has an outer transparent optical element comprising a distribution of Fresnel lens segments, each shaped so as to direct the light solid angle which is collected thereby into a beam having predetermined characteristics.

The lens segments may have any shape (such as quadriangular or triangular) and the single Fresnel lenses may have a pitch of their projections which is either uniform or variable, with a height of the projections which also may be either uniform or variable. Typical values of the pitch and height are for instance 1-2 millimeters. At any rate, the dimensions must be sufficiently large to render the lens segments visible for the viewer.

Due to the above mentioned features, each Fresnel lens segment may be designed so as to optimize the result, as a function of the angle under which the segment is seen from the light source. A further advantage of the invention lies in that lights of any shape may be provided, while keeping the efficiency high, so as to obtain an ideal adaptation to the shape of the portion of the car body where the light must be mounted. Thus, the light according to invention improves the known solutions also from the standpoint of the aesthetical features.

According to a further variant, the Fresnel lens segments may be shaped so as to operate also by Total Inner Reflection (TIR) thus rendering the manufacture possible of transparent elements having a strongly curved shape possible, so that the light body is substantially made by the transparent element, the reflector being reduced to a minor part with respect to the whole light. According to a further variant, the reflector can be totally absent, since the light emitted by the source is collected for the most part by the transparent element

Further features and advantages of the invention will become apparent from the description which follows with reference to the annexed drawings, given purely by way of non limiting example, in which:
figure 1 shows the light according to the prior art which has been described above,
figure 2 is a diagrammatic view of an embodiment of the light according to the invention,
figure 3 is a perspective view of a portion of the transparent element of the light of figure 2, and

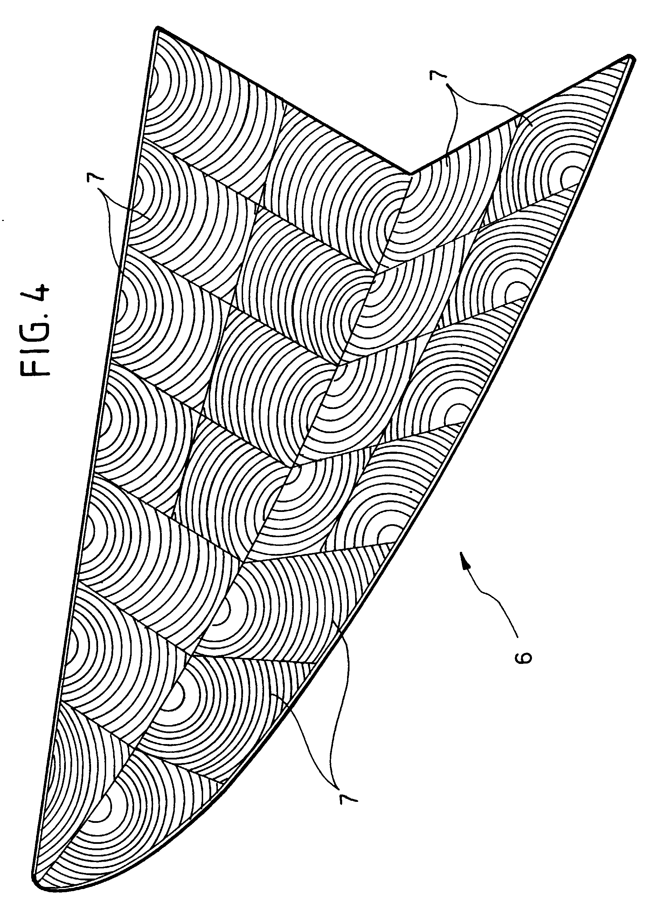

figure 4 shows a further variant.

In the case of the present invention, the reflector 2 placed at the rear of the light source is reduced to an element of small dimension, whereas in front of lamp 3 there is placed a single transparent element 6 having a curved shape, surrounding a lamp 3 also on the sides thereof. The transparent element 6 is made with a matrix distribution of Fresnel lens 7, each of which collects the light solid angle 8 seen thereby and transforms it into a beam of predetermined features. Each segment 7 is optimized so as to obtain the maximum efficiency of the light, by deviating the light rays received in a different manner, as a function of the angle under which the single segment is seen from lamp 3. As already indicated, a light is thus obtained having a high efficiency with a relatively simple and inexpensive structure.

Further advantages of the invention lies in that the segmentation of the transparent element 6 into a plurality of small Fresnel lenses segments 7 may be adapted with any shape of the element 6, which gives clear advantages from the aesthetical standpoint as well as a great flexibility to the designer, which must adapt the light to the shape of the car portion where the light must be mounted. The shape of the segments may be of any type (such as quadriangular or triangular) and determines the aesthetical form of the light.

As already indicated in the foregoing, the distribution of the projections in each segment 7 may have a constant or variable pitch and/or uniform or variable height.

According to a further feature, as already indicated, at least part of the Fresnel lens segments 7 may be provided so that the segments operate also by Total Inner Reflection (TIR) thus enabling a deviation of the beam in the desired direction possible also for segments 7 located laterally to lamp 3. It is thus possible to provide a transparent element 6 which has a strongly curved shape, so that the rear reflector 2 may be totally absent or at any rate a reduced portion of the light.

Naturally, while the principle of the invention remains the same, the details of construction and the embodiments may widely vary with respect to what has been described and illustrated purely by way of example, without departing from the scope of the present invention.

## Claims

1. Motor-vehicle light, comprising a light source (3), a reflective element (2) and a Fresnel optical element (6) located in front of the light source (3), characterized in that said optical element (6) has a distribution of Fresnel lens segments (7, each of which is shaped so as to direct the light solid angle collected thereby into a predetermined direction.

2. Light according to claim 1, characterized in that the Fresnel lens segments (7) are distributed according to a matrix.

3. Light according to claim 2, characterized in that the shape of the Fresnel lens segments (7) is quadriangular and/or triangular.

4. Light according to claim 2, characterized in that the projections of the Fresnel lens segments (7) have a variable pitch.

5. Light according to claim 2, characterized in that the projections of the Fresnel lens segments (7) have a uniform pitch.

6. Light according to claim 2, characterized in that the projections of the Fresnel lens segments (7) have a variable height.

7. Light according to claim 2, characterized in that the projections of the Fresnel lens segments (7) have a uniform height.

8. Light according to claim 1, characterized in that said optical element (6) has a strongly curved shape surrounding the light source.

9. Light according to claim 8, characterized in that it has no reflector.

10. Light according to claim 1, characterized in that between the source and the optical element (6) a transparent filter is located for changing the colour of the light emitted by the source.

11. Light according to claim 1, characterized in that at least some of said Fresnel lens segments (7) are shaped so as to operate also, by Total Inner Reflection.
